# EUROPEAN PATENT SPECIFICATION

(11) **EP 4 457 070 B1**
(45) Date of publication and mention of the grant of the patent: **17.12.2025**
(21) Application number: 23700938.6
(22) Date of filing: 12.01.2023
(51) Int. Cl.: B29C 44/08, B29C 44/42, B29C 44/34, B29C 44/06, B29C 44/02

(54) **MOULDED POLYMER ARTICLE AND MANUFACTURE THEREOF**
GEFORMTER POLYMERARTIKEL UND HERSTELLUNG DAVON
ARTICLE EN POLYMERE MOULE ET SA FABRICATION

(30) Priority: 25.01.2022 GB 202200952
(43) Date of publication of application: 06.11.2024
(73) Proprietor: Bockatech Ltd, Wyton, Huntingdon PE28 2AF (GB)
(72) Inventor: CLARKE, Peter Reginald, Wyton, Huntingdon PE28 2AF (GB); BOCKING, Chris, Wyton, Huntingdon PE28 2AF (GB)
(74) Representative: Page White Farrer
(86) International application number: PCT/EP2023/050659
(87) International publication number: WO 2023/143926

(56) References cited:
- WO-A1-2017/134181
- WO-A2-2020/198656
- GB-A- 2 576 885
- US-A1- 2005 058 824

## Description

The present invention relates to a moulded polymer article and to a method of forming a moulded polymer article. The present invention relates in particular to the formation of foamed thermoplastic articles, e.g. cups or containers for liquid and/or food.

In the packaging industry, a commonly-used type of disposable cup (for example, take-away coffee cups) is a paper cup with an inner lining of a plastic material, e.g. low-density polyethylene (LDPE). As these cups are made of two different materials which can be difficult and/or costly to separate, their recycling can prove challenging. Furthermore, as there is a seam down one side of the cup where the paper material is joined together, liquid may leak from the area of the join at the rim of the cup when the cup is tilted for consuming the beverage within (particularly when the cup is used in connection with a lid having a mouthpiece through which the beverage passes for consumption).

Efforts have been made in the industry to provide disposable polypropylene cups. In conventional injection moulding a thick wall is required to create some thermal insulation in a cup. Typically, a cellular microstructure provides the thermal insulation, and a blowing agent is added to the thermoplastic polymer to create a foamed microstructure to further improve the thermal insulation, and to reduce the density of the foamed wall.

WO-A-2017/134181, WO-A-2019/025274, WO-A-2020/048912, WO-A-2021/175808, GB-A-2565118, GB-A-2576885 and GB-A-2592616 disclose hollow articles, for example polypropylene cups, and methods of forming the respective articles, in which the article comprises a wall part which has opposite outer solid skin layers and a core layer therebetween which comprises an expanded cellular foam. These known methods can provide a hollow article having high wall strength and low mass. WO-A-98/17456 discloses the manufacture of a variety of different injection moulded and foamed articles, including cups. US 2005/0058824 A1 discloses a a thermoplastic resin foamed article, wherein the foamed article has two opposite surfaces, wherein the foamed article has at least a skin layer which defines one of the opposite surfaces and has a porosity of 0% or more but less than 1%.

However, despite these known disclosures, there is still a need to produce foamed polymer articles, e.g. cups or containers for liquid and/or food, which have even higher strength for a given wall thickness and associated mass, and are composed of a single recyclable polymer material, and preferably which walls also exhibit good thermal insulation properties.

There is also still a need to produce such foamed polymer articles for many other applications, for example non-round containers, or wall-like elements such as substantially flat components for a variety of different applications, e.g. for food and beverage products, and for non-food, automotive and industrial markets, in which the foamed polymer articles exhibit high rigidity for a given wall thickness.

The present invention aims at least partially to overcome the problem of achieving even higher strength walls for any given wall thickness and associated mass, and preferably even smaller initial wall thickness and even lower mass for foamed polymer articles for a given user application, in articles composed of a single recyclable polymer material, and preferably which walls also exhibit good thermal insulation properties.

The present invention provides a method of forming a moulded polymer article, the method comprising:
(a) providing a mould having a first mould part and a second mould part, the first and second mould parts having respective first and second cavity-forming surfaces;
(b) closing the mould thereby defining a cavity between the first and second cavity-forming surfaces;
(c) injecting into the cavity a molten plastic composition comprising a polymer and a blowing agent system which is dispersed within the polymer, the molten plastic composition being injected at an injection pressure, wherein the blowing agent system comprises a physical blowing agent wherein the physical blowing agent comprises a first gas dissolved in the polymer, and, in combination with the physical blowing agent a chemical blowing agent, the chemical blowing agent comprising a chemical precursor which can decompose to form a second gas, wherein the first gas is an inorganic gas which is dissolved in the molten plastic composition at a concentration of from 0.2 to 1.5 wt%, based on the total weight of the molten plastic composition and wherein the second gas is an inorganic gas as the second and the chemical precursor is dispersed or dissolved in the molten plastic composition at a concentration of from 0.5 to 4.0 wt%, based on the total weight of the molten plastic composition,
   wherein during or after the injecting step (c), the injected plastic composition in contact with the first and second cavity-forming surfaces is cooled to form first and second solid skins respectively adjacent to and in contact with the first and second cavity-forming surfaces, whereby in at least one region of the cavity is respectively located at least one portion of the plastic composition in which portion at least some of the plastic composition between the first and second solid skins remains molten, wherein the at least one portion has a thickness of from greater than 0.45 mm to up to 1 mm;
(d) opening the mould before the molten plastic composition between the first and second solid skins has solidified in the at least one portion, so as to expose the molten plastic composition of the respective portion to an external pressure lower than the injection pressure thereby allowing the molten plastic composition between the first and second solid skins of the respective portion to expand by foaming to form an expanded cellular foam as a result of the molten plastic composition beneath the first solid skin expanding outwardly away from the second solid skin, wherein the opening step comprises removing the first mould part so that the first solid skin is no longer in contact with the first cavity-forming surface,
   wherein the molten plastic composition between the first and second solid skins of the respective portion expands by foaming to form the expanded cellular foam in a first foam forming phase and in a subsequent second foam forming phase,
   wherein in the first foam forming phase the physical blowing agent comes out of solution in the polymer to form bubbles of the first gas which form first and second layers of the expanded cellular foam, the first layer being adjacent to the first solid skin and the second layer being adjacent to the second solid skin, thereby to increase a separation distance between the first and second solid skins, and
   in the subsequent second foam forming phase the physical blowing agent continues to form the first gas, and the chemical precursor of the chemical blowing agent decomposes to form the second gas, and the first gas, and the optional second gas, form further gas bubbles which form an intermediate layer of the expanded cellular foam, the intermediate layer being between, and adjacent to, the first and second layers, thereby further to increase the separation distance between the first and second solid skins, wherein the intermediate layer comprises cells which have an average aspect ratio between a maximum cell dimension and a minimum cell dimension which is greater than 2:1 and less than 5:1 and the maximum cell dimension of the cells is oriented in a direction extending between the first and second solid skins; and
(e) cooling the expanded cellular foam to cause the molten plastic composition between the first and second solid skins of the respective portion to solidify and to form in the moulded polymer article a monolithic wall part comprising a core layer of the expanded cellular foam disposed between, and integral with, the first and second solid skins, wherein the core layer is multilaminar and comprises the first layer, the intermediate layer and the second layer of the expanded cellular foam, wherein the first and second layers comprise a first cellular microstructure and the intermediate layer comprises a second cellular microstructure, wherein the first cellular microstructure comprises or consists of closed cells having an average maximum cell dimension of from 200 to 500 µm, and wherein the second cellular microstructure comprises or consists of open cells interconnected by ruptured cellular walls wherein in the second cellular microstructure the open cells have an average maximum cell dimension of from greater than 500 to up to 1500 µm.

Preferred features of the method are defined in dependent claims 2 to 10.

The present invention also provides a moulded polymer article comprising a monolithic wall part composed of a polymer, the monolithic wall part comprising a core layer of expanded cellular foam, composed of the polymer, disposed between, and integral with, first and second solid skins, composed of the polymer, wherein the core layer is multilaminar and comprises a first layer of the expanded cellular foam adjacent to the first solid skin, a second layer of the expanded cellular foam adjacent to the second solid skin, and an intermediate layer of the expanded cellular foam which is between, and adjacent to, the first and second layers, wherein the first and second layers comprise a first cellular microstructure comprising closed cells, wherein in the first cellular microstructure the closed cells have an average maximum cell dimension of from 200 to 500 µm, and the intermediate layer comprises a second cellular microstructure comprising cells which have an average aspect ratio between a maximum cell dimension and a minimum cell dimension which is greater than 2:1 and less than 5:1 and wherein in the second cellular microstructure the maximum cell dimension of the cells is oriented in a direction extending between the first and second solid skins, wherein in the second microstructure the cells have an average maximum dimension of from greater than 500 to up to 1500 µm and in the second cellular microstructure the cells comprise or consist of open cells interconnected by ruptured cell walls.

Preferred features of the moulded polymer article are defined in dependent claims 11 to 15.

The method of the present invention forms a moulded polymer article having a wall that may have any shape, morphology or function. However, the present invention has particular application in the manufacture of hollow articles, such as a cup, or any other container or vessel for containing a liquid or a food. Alternatively, the method of the present invention forms a moulded polymer article having a wall-like or plate-like configuration.

The present invention is at least partly predicated on the finding by the present inventor that by providing a blowing agent system, which is dispersed within the polymer of the molten plastic composition, which comprises a combination of a physical blowing agent and a chemical blowing agent, in a mould opening step the molten plastic composition, which is between first and second solid skins, expands by foaming to form an expanded cellular foam having a particular microstructure which imparts preferred properties to the resultant monolithic wall part of a moulded polymer article.

Since the first filing of the Applicant's earlier patent specifications as identified above, e.g. WO-A-2017/134181, WO-A-2019/025274, WO-A-2020/048912 and WO-A-2021/175808, the Applicant has diligently strived to reduce the weight of a moulded polymer article, such as a cup made using the foam-forming method disclosed in these patent specifications. The Applicant has found that when using chemical blowing agents, it was possible to reduce the density of the foam by enlarging the cell size, but in the cellular microstructure of the expanded foam layer the cells had a substantially spherical morphology with thick cellular walls.

The substantially spherical morphology and thick cellular walls provides adequate mechanical properties and good thermal insulation properties, in a relatively lightweight wall. However, there is a need to improve the mechanical properties, in particular the flexural strength of the wall, and to reduce the weight of the wall even further.

If, during the expansion of the cellular foam layer, the wall is "over blown", and the cellular foam layer is expanded from the injection moulded polymer layer by an expansion factor which is too high, a ruptured structure can be formed in which the foam layer was split down a middle line, creating a central void. This was unacceptable, because the mechanical connection between the skins, which is required to form a sandwich structure, was lost, causing the outside skin to become flexible, which reduced the mechanical properties of the moulded polymer article.

The Applicant discovered unexpectedly that a cell structure that would stretch between the skins could be achieved by using a physical blowing agent, which could produce a gas such as nitrogen (N₂). This was unexpectedly found to produce much finer cells with thinner walls and therefore better thermal insulation.

The Applicant then discovered unexpectedly that by applying a light-weighting program, in which the thickness of the injection moulded wall section was reduced from an initial value of a nominal 0.9 mm, to a first thinner value of 0.7 mm then to a second still further thinner value of 0.5 mm, at such a value of 0.5 mm the physical blowing agent, such as N₂, was not able reliably and repeatably to separate the skins, and also a chemical blowing agent (generating a gas such as N₂ or CO₂) also was not able reliably and repeatably to separate the skins with such a thin injection moulded wall thickness.

For such a thin injection moulded wall thickness, the Applicant unexpectedly found that by combining the two physical and chemical blowing agents, the resultant blowing agent system was able reliably and repeatably to separate the skins.

The Applicant then focused on improving the cell structure, with the objective of improving mechanical properties of the expanded wall and reducing the weight of the expanded wall for any given expanded wall thickness.

Initially, the Applicant found that over-dosing the chemical blowing agent can cause the cells to rupture, as the chemical blowing agent continued to create a gas (such as CO₂), which burst the very thin walled cells but didn't cause a central void.

The Applicant then controlled the chemical blowing agent dose to prevent the cells rupturing, to provide a microstructure comprising the following elements: Solid skin, microcellular bubbles, elongated cells that were aligned with each other and in the direction of expansion, microcellular bubbles and solid skin. The blowing agent dose can be controlled by, for example, not according to the claims using a physical blowing agent alone, for relatively thick injection moulded walls of about 0.8 mm or greater, or according to the claims by using the combination of a physical blowing agent and a chemical blowing agent for relatively thin injection moulded walls of less than about 0.8 mm, for example in the range of 0.45 to 0.75 mm.

This microstructure achieves the lowest density structure with very good mechanical properties and thermal insulation.

The expanded cellular foam is formed in a first foam forming phase and in a subsequent second foam forming phase.

In the first foam forming phase the physical blowing agent comes out of solution in the polymer to form bubbles of a first gas which form first and second layers of the expanded cellular foam. The first layer is adjacent to a first solid skin and the second layer is adjacent to a second solid skin, thereby to increase a separation distance between the first and second solid skins

In the subsequent second foam forming phase, the physical blowing agent continues to form the first gas, the chemical precursor of the chemical blowing agent decomposes to form the second gas, and the first gas, and the optional second gas, form further gas bubbles which form an intermediate layer of the expanded cellular foam. The intermediate layer is between, and adjacent to, the first and second layers, thereby further increasing the separation distance between the first and second solid skins.

Then, the chemical blowing agent can decompose to form bubbles of a second gas, which form, either alone or in combination with bubbles of the first gas formed from a residual content of the physical blowing agent to came out of solution, an intermediate layer of expanded cellular foam between the opposite layers of expanded cellular foam.

Therefore, the physical blowing agent comes out of solution and forms bubbles of a gas which forms opposite layers of expanded cellular foam having a first microstructure, which layers are adjacent to respective outer solid skins of unexpanded polymer. If, not according to the claims, only a physical blowing agent is present as the blowing agent system, after the opposite layers have been formed, the physical blowing agent forms further gas bubbles which form an intermediate layer of the expanded cellular foam.

Alternatively, if according to the claims a chemical blowing agent is additionally used in combination with the physical blowing agent, so that the blowing agent system comprises a mixture of the physical blowing agent and the chemical blowing agent, the chemical blowing agent decomposes slowly to form further gas bubbles, in which gas formed by decomposition of the chemical blowing agent forms gas bubbles, either alone or in combination the gas from the physical blowing agent coming out of solution, to create an intermediate layer of expanded cellular foam between the opposite layers of expanded cellular foam.

When the blowing agent system comprises a mixture of the physical blowing agent and the chemical blowing agent, the physical blowing agent has a higher initial gas release rate than the chemical blowing agent. This is because the physical blowing agent only needs to come out of solution from the molten polymer, which can occur rapidly because the physical gas is at a high pressure, to achieve a high gas pressure which forms gas bubbles quickly, whereas the chemical blowing agent requires a longer time period (although in absolute terms this period is still very short and measured in milliseconds) to decompose thermally in order to form gas bubbles.

However, the gas from the physical blowing agent also tends to diffuse quickly though the exterior surfaces of the polymer, and so the gas pressure from the physical blowing agent can dissipate quickly, and consequently can drop below the minimum pressure required to form gas bubbles at a sufficient pressure to expand the polymer. When, as claimed, chemical blowing agent is present, the slower decomposition of the chemical blowing agent tends to generate a more uniform gas pressure over a longer time period, and therefore the chemical blowing agent can generate gas bubbles at a sufficient pressure to expand the polymer, in the intermediate layer, over a continuous and longer time period, even after the physical blowing agent has dissipated from the polymer.

It has been found by the present inventors that for any given molten polymer composition and for typical injection moulded wall thicknesses, prior to expansion upon opening the mould, of greater than 0.45 mmm, when only a physical blowing agent is employed the injection moulded wall thickness is increased, to form the expanded wall thickness, by an expansion factor typically with the range of 2 to 3, but that when the combination of a physical blowing agent and a chemical blowing agent is employed the injection moulded wall thickness, to form the expanded wall thickness, is increased by an expansion factor typically with the range of from 3 to 4.

In various embodiments of the present invention, it has been found that when the injection moulded wall thickness, prior to expansion upon opening the mould, is within the range of 0.45 to 0.75 mm, when only a physical blowing agent is employed the injection moulded wall thickness is increased, to form the expanded wall thickness, by an expansion factor typically with the range of 2 to 3, but that when the combination of a physical blowing agent and a chemical blowing agent is employed the injection moulded wall thickness is increased, to form the expanded wall thickness, by an expansion factor typically with the range of from 3 to 4

In one embodiment of the present invention, the injection moulded wall thickness is 0.5 mm, which can be expanded to a total wall thickness of 2 mm using the combination of a physical blowing agent (e.g. N₂) and a chemical blowing agent (generating e.g. CO₂ or N₂). This combination ensures that the opposite skins separate, in order to expand the wall.

In another embodiment of the present invention, the injection moulded wall thickness is within the range of 0.7 mm < 1 mm which can be expanded using the combination of a physical blowing agent (e.g. N₂) and a chemical blowing agent (generating e.g. CO₂ or N₂). This wall thickness could be expanded by using only a chemical blowing agent, but this would require a relatively high concentration of chemical blowing agent, e.g. at least 3.5 wt%. By adding a physical blowing agent to the chemical blowing agent, a lower concentration of chemical blowing agent, e.g. 1 wt% can be employed, which reduces material costs, and also a higher foam expansion thickness can be achieved, providing an increased expanded wall thickness for a given injection moulded wall thickness.

Furthermore, yet another embodiment of the present invention, the injection moulded wall thickness is 0.7 mm; this can be expanded using, not according to the claims, only a physical blowing agent (e.g. N₂) to provide an expanded wall thickness of approximately 1.5 - 2 mm depending on the shape and dimensions of the moulding surfaces, whereas if a chemical blowing agent (generating e.g. CO₂ or N₂) is added to the physical blowing agent the injection moulded wall thickness of 0.7mm can be expanded to provide an expanded wall thickness of approximately 2.5 - 3 mm depending on the shape and dimensions of the moulding surfaces.

The opposite layers and intermediate layer of the expanded cellular foam have different cellular microstructures, which can provide the wall part with an increased mechanical strength for any given initial wall thickness and associated mass. This provides, for example, that for a given thickness of the resultant monolithic wall part, as compared to the known walls described above, the mass can be reduced while providing equivalent, or even higher, mechanical strength.

The present inventor has found that the moulded polymer articles of the present invention also have a high level of stiffness required for such articles, despite the reduction in the amount of material used therein. It has been found that as the cellular foamed plastic composition, typically a thermoplastic polymer such as a polyolefin, typically polypropylene, cools slowly, due to its thermal insulation qualities, the crystallinity of the plastic composition can increase, which in turn can increase the rigidity of the cellular foamed plastic composition. The expansion of the molten plastic composition between the first and second skins by foaming also provides the articles with good thermal insulation properties.

The present invention also provides the technical effects and advantages that the moulded polymer article is easily recyclable and reusable, has a high level of stiffness provided by the expanded wall part(s), and may also possess good thermal insulation properties provided by the expanded wall part(s), yet is initially very thin and consequently uses a low mass of the plastic composition to produce an article of a given size, for example a cup having a desired volume capacity. The moulded polymer article preferably has highly smooth opposite surfaces corresponding to a desired precise geometrical shape. The moulded polymer article may incorporate unexpanded, or less expanded, areas which can provide structural and/or aesthetic properties to the article; for example the unexpanded, or less expanded, areas may be transparent, or visually clear, whereas the expanded wall part(s) may be translucent or opaque.

Also, since the entire container may be made of a single layer of recyclable material (i.e. no layers of different materials which need to be separated), the container is easier to recycle than the commonly used plastic-lined paper cups.

Furthermore, as the articles are injection moulded in the methods of the present invention, there is no join present in the article through which leakage of a liquid contained therein could occur. For example, the sidewall and base of a hollow container can be integrally moulded.

Embodiments of the present invention will now be described by way of example only with reference to the accompanying drawings, in which:
Figure 1 is a side view of a cup formed by the method of a first embodiment of the present invention;
Figure 2 is a cross-section on line A-A of a first part of the cup of Figure 1 illustrating the appearance of an expanded translucent region of the cup; and
Figures 3a, 3b and 3c are each a cross-section on line A-A of a mould for forming the expanded cellular foam region of the cup of Figure 1 at different respective stages in the method of the present invention, Figure 3a showing an injection step into a closed mould, Figure 3b showing a first phase after opening the mould and Figure 3c showing a second phase, after the first phase and prior to a cooling step; and
Figure 4 is a photomicrograph of a cross-section through a wall part of a moulded polymer article according to a second embodiment of the present invention.

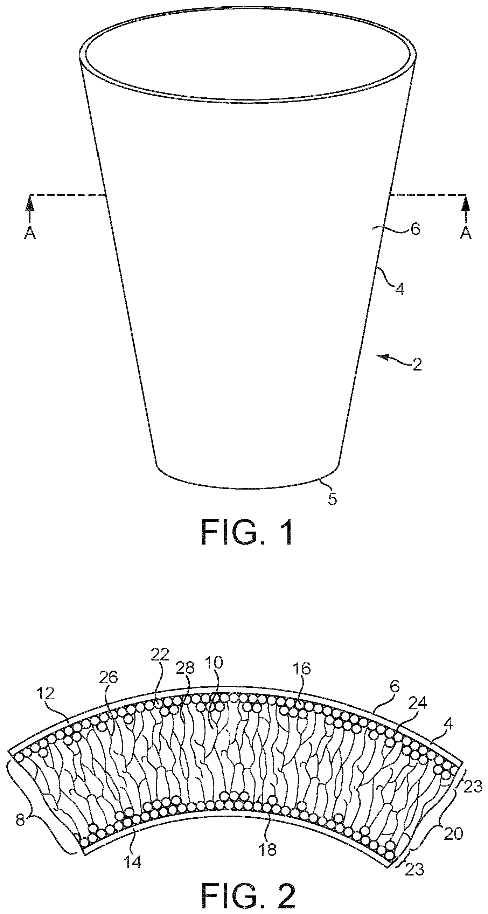

Referring to Figure 1, there is shown a side view of a moulded polymer article 2, for example a hollow container such as a cup, such as a coffee cup, in accordance with the present invention and formed by the method of the present invention.

The moulded polymer article 2 comprises a monolithic wall part 4 composed of a polymer. The monolithic wall part 4 is formed by an expanded cellular foam region 6. In this embodiment, the monolithic wall part 4 comprises the annular sidewall of the hollow container, and may also comprise an integral base 5 of the hollow container. In some embodiments, substantially the entire area of the article may be composed of the monolithic wall part 4, and thereby an expanded cellular foam region 6. In alternative embodiments, at least one region of at least one wall of a moulded polymer article 2 is respectively comprised by the monolithic wall part 4.

In this embodiment of the present invention, the polymer may comprise a polyolefin or blend of a plurality of polyolefins, optionally polyethylene or polypropylene; or a polyester, optionally polyethylene terephthalate or polybutylene terephthalate; or polylactic acid. In the preferred embodiment, the polymer comprises polypropylene. Polypropylenes having a Melt Flow Index (MFI) of from 10 to 120 are particularly preferred. The Melt Flow Index of a polymer can be measured according to ASTM D1238.

In the illustrated embodiment, the monolithic wall part 4 is formed by an annular expanded cellular foam region 6. In this specification, the term "annular" means "generally ring-like", is not limited to geometrically circular shapes, and encompasses shapes that may be circular or other than circular, for example elliptical, polygonal, etc. The monolithic wall part 4, and thereby the expanded cellular foam region 6, typically has a thickness of from 1 to 3 mm, optionally from 1 to 2 mm, further optionally from 1 to 1.5 mm.

The expanded cellular foam region 6 typically appears translucent to the naked eye because the expanded cellular foam includes hollow cells that have cellular walls that reflect visible light. However, if a pigment is incorporated into the thermoplastic polymer at a high concentration, the expanded cellular foam region 6 may typically appear opaque, with a solid colour.

Referring to Figure 2, there is shown a cross-section on line A-A illustrating the microstructure of a segment of the expanded cellular foam region 6 in the moulded polymer article of Figure 1.

It is emphasized that in Figure 2, which is highly schematic, dimensions are exaggerated for the sake of clarity of illustration.

As shown in detail in Figure 2, the monolithic wall part 4 comprises a core layer 8 of expanded cellular foam 10, composed of the polymer, disposed between, and integral with, first and second solid skins 12, 14, also composed of the polymer.

The core layer 8 is multilaminar and comprises a first layer 16 of the expanded cellular foam 10 adjacent to the first solid skin 12, a second layer 18 of the expanded cellular foam 10 adjacent to the second solid skin 14, and an intermediate layer 20 of the expanded cellular foam 10 which is between, and adjacent to, the first and second layers 16, 18.

The first and second layers 16, 18 comprise a first cellular microstructure 23 comprising closed cells 22 and the intermediate layer 20 comprises a second cellular microstructure 24 comprising open cells 26 interconnected by ruptured cellular walls 28.

The first cellular microstructure 23 comprises closed cells 2 which preferably constitute at least 75% by number of the cells in the first and second layers 16, 18. This proportion is determined by microscopic analysis, typically using commercially available hardware/software analytical tools well known to those skilled in the art. A cross-section of the first cellular microstructure 23 is examined microscopically and a statistically valid number of the cells in the cross-section is selected randomly for analysis; for example, twenty cells are selected. Then the number of closed cells 22, which are cells showing a closed circumferential cellular wall in the cross-section, is calculated as a proportion of the total number of selected calls. The second cellular microstructure 24 comprises open cells 26 which preferably constitute at least 75% by number of the cells in the intermediate layer 20. This proportion is determined by a corresponding microscopic analysis as described above for the closed cells 22 of the first cellular microstructure 23.

Typically, in the first cellular microstructure 23 the closed cells 22 have an average aspect ratio between a maximum cell dimension and a minimum cell dimension of from 1:1 to less than 2:1. When the closed cells 22 have an average aspect ratio between a maximum cell dimension and a minimum cell dimension which is greater than 1:1, typically the maximum cell dimension of the closed cells 22 is oriented in a direction extending between the first and second solid skins 12,14. This direction is typically orthogonal to the first and second solid skins 12, 14, but alternatively may be inclined at an acute angle to the first and second solid skins 12, 14. The closed cells typically have an average maximum cell dimension of from 200 to 500 µm.

In this specification, the average aspect ratio of the closed cells 22 and the average maximum cell dimension of the closed cells 22 are also determined by microscopic analysis. A cross-section of the first cellular microstructure 23 is examined microscopically and a statistically valid number of the closed cells 22 in the cross-section is selected randomly for analysis; for example, twenty closed cells 22 are selected. Then the maximum and minimum cell dimensions of each selected closed cell 22 in the cross-section are measured by microscopic analysis. The maximum cell dimensions of the selected closed cell 22 are numerically averaged to calculate the average maximum cell dimension of the closed cells 22. The aspect ratio of each selected closed cell is calculated from these measurements, and then the aspect ratios are numerically averaged to calculate the average aspect ratio of the closed cells 22.

In the second cellular microstructure 24, the open cells 26 have an average aspect ratio between a maximum cell dimension and a minimum cell dimension which is greater than 2:1 and less than 5:1, optionally greater than 3:1 and less than 5:1. In the second cellular microstructure 24, the maximum cell dimension of the open cells 26 is oriented in a direction extending between the first and second solid skins 12, 14. As for the first cellular microstructure 23, this direction is typically orthogonal to the first and second solid skins 12, 14, but alternatively may be inclined at an acute angle to the first and second solid skins 12, 14. The open cells 26 typically have an average maximum cell dimension of from greater than 500 to up to 1500 µm.

In this specification, the average aspect ratio of the open cells 26 and the average maximum cell dimension of the open cells 26 are determined by the same microscopic analysis technique as described above for the closed cells 22.

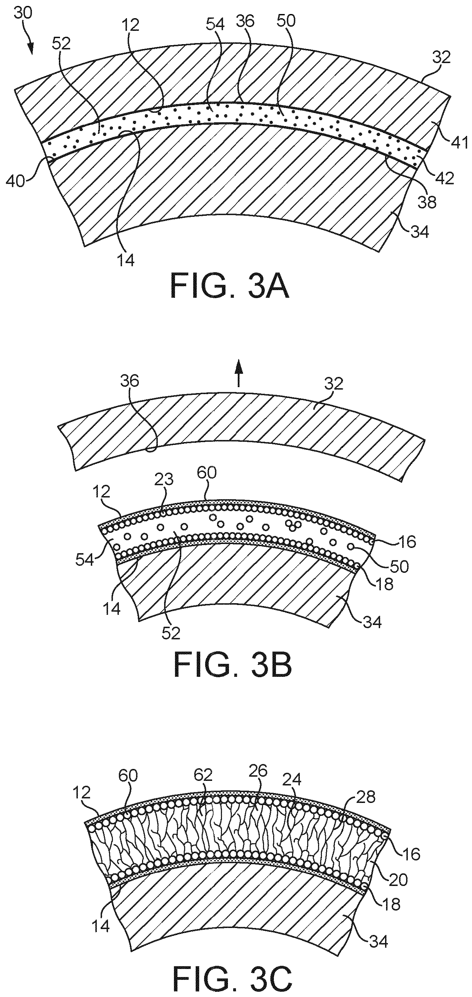

The method of the present invention to make the moulded polymer article 2 will now be described with reference to Figures 3a, 3b and 3c.

Referring to Figure 3a which shows an injecting step, the moulded polymer article 2 is formed using a mould 30 having a first, outer, mould part 32 and a second, inner, mould part 34. The first and second mould parts 32, 34 have respective first and second cavity-forming surfaces 36, 38, which are annular in the illustrated embodiment. The first cavity-forming surface 36 of the outer mould part 32 and the second cavity-forming surface 38 are macroscopically smooth and without any undulations in a circumferential direction, and in the illustrated embodiment each of the surfaces 36, 38 defines a precise geometric surface which is circular in horizontal cross-section. Since in this embodiment a cup is to be formed, the surfaces 36, 38 are also frusto-conical in vertical cross-section.

The mould 30 is closed thereby defining a region 40 of a cavity 42 between the first and second cavity-forming surfaces 36, 38. When the first and second cavity-forming surfaces 36, 38 are circular, and annular, the region 40 of the cavity 42 is correspondingly circular, and annular.

In the illustrated embodiment, the region 40 is in a sidewall-forming portion 41 of the mould 30 and extends to a base-forming portion (not shown) of the mould 30. The region 40 defines most of the sidewall-forming portion 41. However, the region 40 may be otherwise located at any location(s) in the cavity 42 to define wall parts in the final moulded polymer article 2 which are to comprise expanded cellular foam, as described further hereinbelow.

The first and second cavity-forming surfaces 36, 38 are highly accurately shaped and dimensioned, and also any undesired movement of the first and second mould parts 32, 34 during the moulding operation as described hereinbelow is substantially avoided, so that during the moulding operation the width of the region 40 of the cavity 42 between the first and second cavity-forming surfaces 36, 38 is constant within a tolerance of +/- 0.5%, preferably +/- 0.2%, based on a nominal, i.e. designed, width.

A molten plastic composition 50 is injected into the cavity 32 by an extruder (not shown) of an injection moulding machine (not shown), using injection moulding technology well known to those skilled in the art of injection moulding.

The molten plastic composition 50 comprises a polymer and a blowing agent system which is dispersed within the polymer. The blowing agent system comprises combination of a physical blowing agent and a chemical blowing agent. The physical blowing agent comprises a first gas dissolved in the polymer and, a chemical blowing agent comprises a chemical precursor which can decompose to form a second gas. The physical blowing agent is injected into the molten polymer in the extruder of the injection moulding machine, and such injection of a physical blowing agent into a molten plastic composition 50 prior to extrusion is also well known to those skilled in the art of injection moulding. The chemical precursor has previously been mixed into the polymer upstream of the extruder, and is dispersed in the molten plastic composition 50.

As is well known to those skilled in the art, chemical blowing agents (CBAs) are comprised of chemical precursor(s) that when heat is applied decompose generating gas. Typically, the chemical precursor(s) are encapsulated in a carrier, most typically a low melt polyethylene (PE), although other carriers may be used to suit a range of plastic materials, the carrier containing nucleation additives to control the foam density. There are two types of CBAs, endothermic and exothermic; typical endothermic CBAs generate CO₂ and a small amount of water, whereas typical exothermic CBAs generate N₂ and ammonia. Exothermic CBAs are not food-safety approved, so can only be used for industrial applications.

In both cases, heat triggers the chemical decomposition reaction, which continues either until all of the chemical precursor(s) have decomposed or the temperature reduces to a level lower than required to keep the reaction going.

In the method of the present invention, the gas release is slow and therefore is constantly generated throughout the foam expansion, and this constant gas release maintains pressure within the foamed component, thereby preventing wall collapse during cooling after mould opening.

Typically, CBAs are supplied as a masterbatch, as a powder or in liquid form, and their gas generation is based on the active % of chemical precursor(s) within the carrier; typically they are 20 wt% to 50 wt% active based on the total weight of the CBA.

When processing CBAs, the wt % of masterbatch relative to the polymer composition is adjusted to achieve the desired vol % of generated gas and wt% of nucleating additives to suit the application, as is well known to those skilled in the art.
It is typically the case that that not all of the chemical precursor(s) decompose during processing, leaving residual CBA that can be subsequently reacted if the polymer foam product is recycled and reprocessed.

The physical blowing agent preferably comprises an inorganic gas as the first gas. Typically, the first gas is selected from nitrogen and carbon dioxide or a mixture thereof. The first gas is dissolved in the molten plastic composition 50 at a typical concentration of from 0.2% to 1.5% wt%, based on the total weight of the molten plastic composition 50.

The chemical precursor preferably comprises a compound which decomposes to form an inorganic gas as the second gas. Typically, the chemical precursor comprises a carbonate or bicarbonate salt and the second gas is carbon dioxide. In some preferred embodiments, the chemical precursor has a decomposition temperature range of from 200 to 220°C, so that the formation of the second gas can be temperature controlled during the moulding process. Typically, the chemical precursor generates the second gas whereby the volume of the second gas is a % of the CBA added to the extruder 50. In preferred embodiments, the chemical precursor is dispersed or dissolved in the molten plastic composition 50 at a concentration of from 0.5 to 4.0 wt%, based on the total weight of the molten plastic composition 50. particularly preferred embodiment, the first gas is nitrogen and the second gas is carbon dioxide. However, in alternative embodiments, other gases may be used.

When the physical blowing agent is injected into the molten polymer in the extruder (not shown) of the injection moulding machine (not shown), the first gas, e.g. N₂ and/or CO₂, goes into solution during the injection phase. The injection phase typically applies an injection pressure of from 300 to 800 bar within the mould cavity 42. Due to the relatively high pressure exerted on the physical blowing agent, which is greater than the pressure required, typically greater than 80 bar, to force the first gas into solution within molten thermoplastic resin, such as polypropylene, the first gas is dissolved in the molten polymer.

The molten plastic composition 50 is injected at an injection pressure P_{injection}. Typically, the injection pressure P_{injection} is at least 150 bar, and typically the injection pressure P_{injection} has a peak pressure during the injection phase within the range of from 600 to less than 800 bar. At the end of the injecting step, optionally a packing pressure, P_{packing}, is applied to the cavity 42. Typical, packing pressure P_{packing} is at least 150 bar, and typically the packing pressure P_{packing} has a peak pressure during the packing phase within the range of from 200 to less than 400 bar, for example when the moulded polymer articles are lightweight cups having a wall thickness of typically 1-3 mm as described herein.

During or after the injecting step, the injected plastic composition 50 in contact with the first and second cavity-forming surfaces 36, 38 is cooled to form the first and second solid skins 12, 14, also shown in Figure 2, respectively adjacent to and in contact with the first and second cavity-forming surfaces 36, 38.

In the region 40 of the cavity 42, there is located a respective portion 52 of the plastic composition 50. In portion 52 of the plastic composition 50, at least some of the plastic composition, in a central layer 54 between the first and second solid skins 12, 14, remains molten

Since the first and second mould parts 32, 34 provide that during the moulding operation the width of the region 40 of the cavity 42 between the first and second cavity-forming surfaces 36, 38 is constant within a tolerance of +/- 0.5%, preferably +/- 0.2%, based on a nominal, i.e. designed, width, correspondingly in portion 52 of the plastic composition 50 the thickness of the portion 52 is constant within a tolerance of +/- 0.5%, preferably +/- 0.2%, based on a nominal, i.e. designed, thickness of the portion 52.

Typically, prior to opening the mould 30 as described further hereinbelow, the portion 52 has a thickness of from greater than 0.5 mm to up to 1 mm.

During the injecting step, and any packing, the injection pressure P_{injection}, and any packing pressure P_{packing}, respectively, are above a minimum pressure threshold, P_{threshold}, in the region 40 of the cavity 42. Typically, the minimum pressure threshold P_{threshold} is 80 bar. This prevents, in the region 40, the physical blowing agent from coming partly out of solution in the polymer so that cellular gas bubbles are not formed in the region 40 during the injecting step, and any packing.

The region 40 of the mould cavity 42 has sufficient thickness, and/or the processing time is so short, that the molten polymer resin in the central layer 54 does not solidify during the injection step, and any subsequent packing. Also, the region 40 can be additionally heated by an external heater to maintain the plastic composition 50 in the central layer 54 in a molten liquid phase. The first mould part 22 may be cooled by a cooling system, for example by a flow of cooling fluid therethrough, to maintain the first mould part 22 at a lower temperature than the second mould part 24. Such temperature control can control the absolute and relative thickness of the central layer 54 and the first and second solid skins 12, 14, so that as described hereinbelow the desired expansion of the central layer 54, and stretching of the first solid skin 12, is achieved.

Thereafter, the mould 20 is opened before the molten plastic composition 50 in the central layer 54 between the first and second solid skins 12, 14 has solidified in the region 40 of the cavity 42.

Referring to Figures 3b and 3c, during the opening step, at least some of the molten plastic composition 50 in the central layer 54 is exposed to an external pressure lower than the injection pressure, and lower than the minimum pressure threshold, for example atmospheric pressure, to permit the blowing agents in the blowing agent system to form gas bubbles within the molten plastic composition 50 in the central layer 54. This action forms in the moulded polymer article 2, as described above with reference to Figures 1 and 2, the expanded cellular foam region 6 comprising the core layer 8 of expanded cellular foam 10, between the first and second solid skins 12, 14, formed from the molten plastic composition 50.

The opening step comprises removing the first mould part 32 so that the first solid skin 12 is no longer in contact with the first cavity-forming surface 36, while maintaining the second solid skin 14 in contact with the second cavity-forming surface 38. In the illustrated embodiment, this opening is achieved by removing the outer mould part 32, exposing the first solid skin 12 to atmospheric pressure and leaving the second skin 14 on the inner mould part 34.

The opening step allows the molten plastic composition 50 in the central layer 54 between the first and second solid skins 12, 14 of the portion 52 to expand by foaming to form the core layer 8 of the expanded cellular foam region 6 as a result of the molten plastic composition 50 beneath the first solid skin 12 expanding away from the second solid skin 14, by removing the first mould part 32 so that the first solid skin 12 is no longer in contact with the first cavity-forming surface 36. This action is controlled to stretch the first solid skin 12 in the portion 52 by a desired stretch ratio.

However, any other configuration to open the mould may be used. In particular, in an alternative embodiment at least one or more portions of the inner mould part 24 may be removed from the second solid skin 14 so that the second solid skin 14, or any part thereof, is additionally or alternatively exposed to atmospheric pressure.

The molten plastic composition 50 between the first and second solid skins 12, 14 of the portion 52 expands by foaming to form the expanded cellular foam region 6 in a first foam forming phase and in a subsequent second foam forming phase.

As illustrated in Figure 3b, in the first foam forming phase the physical blowing agent comes out of solution in the polymer to form bubbles 60 of the first gas which form the first and second layers 16, 18 of the expanded cellular foam 10. The first layer 16 is adjacent to the first solid skin 12 and the second layer 18 is adjacent to the second solid skin 14. As described above, the first and second layers comprise a first cellular microstructure 23 comprising closed cells 22.

As illustrated in Figure 3c, in the subsequent second foam forming phase, the chemical precursor of the chemical blowing agent decomposes to form bubbles 62 of the second gas which form the intermediate layer 20 of the expanded cellular foam 10, the intermediate layer 20 being between, and adjacent to, the first and second layers 16, 18. Alternatively, not according to the claims, when only a physical blowing agent is present, the physical blowing agent forms the intermediate layer 20. As described above, the intermediate layer 20 comprises a second cellular microstructure 24 comprising open cells 26 interconnected by ruptured cellular walls 28. The second bubbles 62 coalesce to form large, elongated open cells 26.

Without being bound by any theory, the present inventor has concluded that the explanation for the formation of this specific expanded cellular microstructure is as follows. The physical blowing agent, for example N₂ or CO₂ is injected into the molten plastic composition as a high-pressure gas in order to put the physical blowing agent into solution in the polymer. The physical blowing agent starts to come out of solution to form gas bubbles, and thereby exerts its pressure against the solid skins 12, 14, at the instant the mould 30 opens. The applied gaseous pressure from the physical blowing agent causes the outer skin, in the illustrated embodiment the first skin 12, to expand and stretch rapidly. The minimum wall thickness of the wall part that can be expanded is typically about 0.5 mm using current high speed injection moulding machines, due to the time taken to de-lock and start to open to mould.

The physical blowing agent forms the first gas which increase the separation of the first skin 12 from the second skin 14. The first gas forms the bubbles 60 which form closed cells 22 in the first cellular microstructure 23 of the first and second layers 16, 18 of the expanded cellular foam 10. As the first gas reaches the solid skins 12, 14, the first gas can then rapidly escape by diffusion through the solid skins 12, 14.

After the opening of the mould 30, the wall part starts to cool. Upon initial opening of the mould 30, the solid skins 12, 14 are already solidified and cooler than the interior molten plastic composition 50. The molten plastic composition 50 nearest to the solid skins 12, 14 starts to solidify, and the molten plastic composition 50 progressively cools and solidifies in a cooling direction oriented inwardly from the solid skins 12, 14.

Consequently, the bubbles 60 form closed cells 22 in the first cellular microstructure 23 of the first and second layers 16, 18 of the expanded cellular foam 10 since those first and second layers 16, 18 are the initial regions of the molten plastic composition 50 to solidify after opening of the mould 30.

When only a physical blowing agent is present, the physical blowing agent continues to come out of solution to form the intermediate layer 20.

Alternatively, according to the claims, when a chemical blowing agent is additionally present, the chemical blowing agent forms the second gas by decomposition of the chemical precursor. The initiation of such chemical decomposition occurs at substantially the same time as the initiation of the physical blowing agent to come out of solution to form the first gas. However, the gas bubble formation from the chemical decomposition is initially slower than the physical gas bubble formation because the chemical precursor needs first to decompose to form the chemical gas bubbles and because the physical blowing agent, comprising gas in solution, is at an initial higher pressure than the chemical gas bubbles and so the physical blowing agent starts to form micro bubbles before the lower pressure gas from the chemical blowing agent can form gas bubbles.

The physical blowing agent very rapidly, after mould opening, generates the first gas at high pressure over short release time whereas in contrast the chemical blowing agent more slowly generates the second gas at a lower pressure over a longer release time.

Therefore, the first foam forming phase is associated with the physical blowing agent.

The second foam forming phase is associated with continuing release of gas out of solution from the physical blowing agent, or alternatively is associated with the chemical blowing agent, but nevertheless during the second foam forming phase some residual physical blowing agent may continue to come out of solution to form the first gas. Although the physical blowing agent typically has a very short release time it is possible for residual physical blowing agent to be released after initiation of the decomposition of the chemical precursor. In other words, during the second foam forming phase, the residual physical blowing agent may continue to form to the first gas, while the chemical blowing agent, additionally present in the blowing agent system, forms the second gas. The first gas may continue to be formed during an initial portion of the second foam forming phase, and for at least a part of the second foam forming phase the first and second gases may be formed simultaneously.

The decomposition of the chemical blowing agent generates the second gas, for example CO₂, after the mould opens, and the second gas maintains pressure against the first and second skins 12, 14 of the moulding, although the chemical blowing agent generates a lower gaseous pressure over a longer time period as compared to the first gas which more quickly generates a higher gaseous pressure over a shorter time period.

Accordingly, by combining the physical blowing agent and the chemical blowing agent, using the physical blowing agent to start the expansion process and the chemical blowing agent to continue to exert gaseous pressure against the opposite first and second skins, this combination of blowing agents allows a thinner injection moulded wall part to expand further, and form a thicker expanded cellular portion.

Furthermore, by combining the physical blowing agent and the chemical blowing agent, a unique cellular microstructure is formed in the monolithic wall part, as described above with reference to Figures 1 and 2.

The physical blowing agent forms the first cellular microstructure 23 in the first and second layers 16, 18 adjacent to the first and second solid skins 12, 14, and creates a very fine, random, polygonal closed cell microstructure.

The chemical blowing agent, potentially also with some residual physical blowing agent, forms the second cellular microstructure 24 in the intermediate layer 20 between the first and second layers 16, 18, and creates large, elongated open cells 26 that have thin, ruptured, cellular walls 28. The elongated open cells 26 are substantially aligned with each other and are inclined, typically orthogonally, to the first and second solid skins 12, 14. The elongated and ruptured open cells 26 of the intermediate layer 20 between the first and second layers 16, 18 give a good "I" beam connection between the first and second solid skins 12, 14 of the moulded monolithic wall part. The intermediate layer 20 forms a low density sinew structure between the first and second layers 16, 18, which forms a supporting microstructure between the first and second solid skins 12, 14. However, since the intermediate layer 20 comprises large, elongated ruptured open cells 26, the thermal insulation properties of the intermediate layer 20 is reduced as compared to an equivalent thickness of smaller, more isotropic, closed cells. The use of a physical blowing agent alone, such as N₂, can create the same cellular microstructure as described above, which is produced using the alternative combination of physical (e.g. N₂) and chemical blowing agents (e.g. N₂ or CO₂) However, when a physical blowing agent is used alone, the moulded wall thickness must be sufficiently large to contain a sufficient volume of physical gas that is able to exert a gas expansion pressure over a sufficient time period to expand the wall by a desired expansion factor. Furthermore, when a physical blowing agent is used alone, the expansion factor is relatively low as compared to the expansion factor which can be achieved using the combination of a physical blowing agent and a chemical blowing agent. For example, an injection moulded wall (for forming a cup) with a moulded wall thickness of 0.5 mm would expand with the physical blowing agent N₂, but would produce a foamed wall section which is only less than 2mm. If a chemical blowing agent is added to the physical blowing agent, the chemical blowing agent can exert a continued gas pressure to achieve a thickness of at least 2 mm. If the injection moulded wall (for forming a cup) had a moulded wall thickness of 0.8 mm, a physical blowing agent (e.g. N₂) on its own could achieve a 2mm expanded wall thickness. As discussed above, the first and second gases combine and have different release rates, but both blowing agents are initiated at substantially the same time.

In the first cellular microstructure 23, the maximum cell dimension of the closed cells 22 is oriented in a direction extending between the first and second solid skins 12, 14 and in the second cellular microstructure 24 the maximum cell dimension of the open cells 26 is also oriented in a direction extending between the first and second solid skins 12, 14. The direction of orientation is substantially aligned with the direction of separation of the first and second cavity-forming surfaces 36, 38 during the opening step. For example, when the first and second cavity-forming surfaces 36, 38 are separated in a direction which is orthogonal to those surfaces, the cells are also oriented in a direction which is orthogonal to the first and second solid skins 12, 14. Alternatively, the first and second cavity-forming surfaces 36, 38 may be separated in a direction which is inclined at an acute angle to the first and second cavity-forming surfaces 36, 38, with the result that the cells are also oriented in a direction which is inclined at an acute angle to the first and second solid skins 12, 14.

In some embodiments of the present invention, the first cellular microstructure 23 and the second cellular microstructure 24 are adjacent to each other and entirely distinct, with a clear boundary between the first cellular microstructure 23 and the second cellular microstructure 24, as a result of the sequential function of the first and second gases from the physical and chemical blowing agents. In other embodiments of the present invention, the first cellular microstructure 23 and the second cellular microstructure 24 may be separated by an intermediate cellular microstructure which constitutes a progressive transition from the first cellular microstructure 23 and the second cellular microstructure 24. Such an intermediate cellular microstructure may result from a partial overlap of the functions of the first and second gases from the physical and chemical blowing agents.

Thereafter, in a cooling step the expanded cellular foam 10 is cooled to cause the molten plastic composition 50 in the central layer 54 between the first and second solid skins 12, 14 of the portion 52 to solidify and to form in the moulded polymer article 2 the expanded cellular foam region 6 comprising the core layer 8 of expanded cellular foam 10 between the first and second solid skins 12, 14. As described above, the cooling proceeds progressively in a cooling direction oriented inwardly from the first and second solid skins 12, 14. The cooling forms in the moulded polymer article 2 a monolithic wall part comprising a core layer 8 of the expanded cellular foam 10 disposed between, and integral with, the first and second solid skins 12, 14, wherein the core layer 8 is multilaminar and comprises the first layer 16, the intermediate layer 20 and the second layer 18 of the expanded cellular foam 10.

The cooling may be carried out passively in the ambient atmosphere, or by active cooling, for example by blowing cool air onto the article 2.

After the cooling step, the wall part 10 typically has a thickness of from 1 to 3 mm, more typically from 1 to 2 mm. Typically, the portion 52 has increased in thickness by from 1 to 1.5 mm to form the wall part 10 from the opening step to the cooling step.

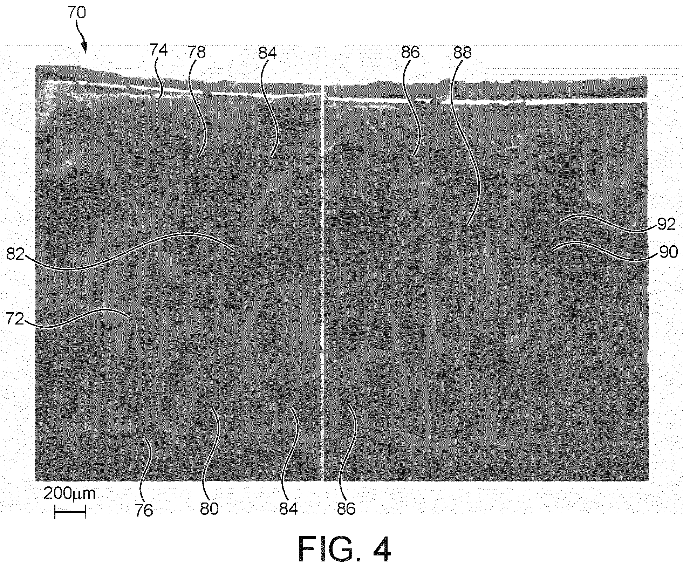

Figure 4 is a photomicrograph of a cross-section through a monolithic wall part of a moulded polymer article according to a second embodiment of the present invention.

As shown in Figure 4, the monolithic wall part 70, consisting of the polymer, in this embodiment polypropylene, comprises a core layer 72 of expanded cellular foam disposed between, and integral with, first and second solid skins 74, 76. The core layer 72 is multilaminar and comprises a first layer 78 of the expanded cellular foam adjacent to the first solid skin 74, a second layer 80 of the expanded cellular foam adjacent to the second solid skin 76, and an intermediate layer 82 of the expanded cellular foam which is between, and adjacent to, the first and second layers 78, 80. The first and second layers 78, 80 comprise a first cellular microstructure 84 comprising closed cells 86 and the intermediate layer 82 comprises a second cellular microstructure 88 comprising open cells 90 interconnected by ruptured cellular walls 92.

As can be seen in Figure 4, the closed cells 86 are slightly elongated, the elongation being in the thickness direction between the first and second solid skins 74, 76. An average aspect ratio between a maximum cell dimension and a minimum cell dimension greater than 1:1 and less than 2:1. The closed cells 86 have an average maximum cell dimension of from 200 to 500 µm.

In contrast, the open cells 90 have an average aspect ratio between a maximum cell dimension and a minimum cell dimension which is greater than 2:1 and less than 5:1. The maximum cell dimension of the open cells 90 is oriented in a direction extending between the first and second solid skins 74, 76. As described above, this direction may be orthogonal to, or inclined at an acute angle to, the first and second solid skins 74, 76. The open cells 90 have an average maximum cell dimension of from greater than 500 to up to 1500 µm.

After the cooling step, the length of the first solid skin 12 in the portion 52 has stretched, as compared to the first solid skin 12 present prior to the opening step, by a typical stretch ratio of from 0.5 to up to 4%. The stretch ratio is the ratio of the increase in the length of the first solid skin 12 after the cooling step based on length of the first solid skin 12 before the opening step. For example, an increase in length of the first solid skin from an initial value of 100 mm to a final value of 102.5 mm would represent a stretch ratio of 2.5%. Preferably the stretch ratio is from 2 to 3%, more preferably from 2.25 to 2.75%, still more preferably from 2.4 to 2.6%, for example about 2.5%.

The solid skin 12 is stretched as a result of the expansion of the molten plastic composition 50 in the central layer 54 between the first and second solid skins 12, 14 to form the final solidified core layer 8 of expanded cellular foam 10. This stretching is controlled, in conjunction with the highly uniform thickness of the portion 52 prior to opening the mould 30, so that the stretching is measurable but small and uniform around the circumference of the expanded cellular foam region 6.

The degree of stretching can be controlled by a number of parameters that can readily be determined by the skilled person, for example to control the thickness of the first and second solid skins 12, 14 prior to opening the mould 30, since thicker skins would have a reduced tendency to stretch as a result of the expansion pressure applied to the skins by the expanding molten plastic composition, and to control the expansion pressure applied to the skins by the expanding molten plastic composition by varying the concentration of the physical and chemical blowing agents in the molten plastic composition.

By controlling the uniformity of the shape and dimensions of the portion(s) to be expanded and by controlling the degree of stretch of the skin(s) that are subjected to stretching as a result of expansion of the molten plastic composition, in the resultant article the corresponding wall part(s) can exhibit a highly accurate shape, for example a highly accurate concentricity of an annular cross-section, combined with small thickness and low mass. The wall part(s) can also exhibit high strength and thermal insulation properties result from the presence of the core layer of expanded cellular foam.

In the illustrated embodiments of the present invention, the annular sidewall is linear in a longitudinal cross-section, and therefore the annular sidewall may be frusto-conical or frusto-pyramidal. In other embodiments of the present invention, the annular sidewall has an upper annular end remote from the base and a lower annular end adjacent to the base, the upper end has a larger circumference than the lower end, and the sidewall is curved in a longitudinal cross-section, and for example the article may be in the shape of a bowl having a large-diameter opening. In such embodiments, the stretch ratio in the outer first solid skin is higher at the upper annular end than at the lower annular end, as a result of the significantly larger circumference causing increased stretching of the outer first solid skin during formation of the expanded cellular foam core layer. In the preferred embodiments of the present invention, the article may be a cup, mug, bottle, basin, bowl, tray, container or vessel for containing a liquid of a food, for example a coffee cup, or a food tray. The container may have heat resistance and may be suitable for warming a drink or food in a microwave oven. The articles may be disposable or reusable, and in either case is recyclable since the article is composed of a single polymer, for example polypropylene.

In some alternative embodiments of the present invention, the article may be additionally provided with or more unexpanded polymer wall regions which appear transparent to the naked. The unexpanded wall region has no cells, or if any cells are present, for example at a low concentration, they have a cell size of typically less than 0.5 microns and therefore are not visible to the naked eye, and consequently the unexpanded wall region appears transparent to the naked eye. The unexpanded wall region appears transparent to the naked eye, since the wall region has solidified prior to the mould opening step, and therefore the physical and chemical blowing agents have stayed in solution/dispersion within the polymer and have been prevented from forming any significant concentration of gas bubbles. After the molten polymer has solidified, it is not possible for cells to form as a result of any action of the blowing agents.

Various modifications to the illustrated embodiments will be apparent to those skilled in the art and are intended to be included within the scope of the present invention as defined by the appended claims.

## Claims

1. A method of forming a moulded polymer article (2), the method comprising:
(a) providing a mould (30) having a first mould part (32) and a second mould part (34), the first and second mould parts (32, 34) having respective first and second cavity-forming surfaces (36, 38);
(b) closing the mould (30) thereby defining a cavity (42) between the first and second cavity-forming surfaces (36, 38);
(c) injecting into the cavity (42) a molten plastic composition (50) comprising a polymer and a blowing agent system which is dispersed within the polymer, the molten plastic composition (50) being injected at an injection pressure, wherein the blowing agent system comprises a physical blowing agent wherein the physical blowing agent comprises a first gas dissolved in the polymer, and, in combination with the physical blowing agent, a chemical blowing agent, the chemical blowing agent comprising a chemical precursor which can decompose to form a second gas, wherein the first gas is an inorganic gas which is dissolved in the molten plastic composition (50) at a concentration of from 0.2 to 1.5 wt%, based on the total weight of the molten plastic composition (50) and wherein the second gas is an inorganic gas as the second and the chemical precursor is dispersed or dissolved in the molten plastic composition (50) at a concentration of from 0.5 to 4.0 wt%, based on the total weight of the molten plastic composition (50),
wherein during or after the injecting step (c), the injected plastic composition (50) in contact with the first and second cavity-forming surfaces (36, 38) is cooled to form first and second solid skins (12, 14) respectively adjacent to and in contact with the first and second cavity-forming surfaces (36, 38), whereby in at least one region of the cavity (42) is respectively located at least one portion (52) of the plastic composition (50) in which portion (52) at least some of the plastic composition (50) between the first and second solid skins (12, 14) remains molten, wherein the at least one portion (52) has a thickness of from greater than 0.45 mm to up to 1 mm;
(d) opening the mould (30) before the molten plastic composition (50) between the first and second solid skins (12, 14) has solidified in the at least one portion (52), so as to expose the molten plastic composition (50) of the respective portion (52) to an external pressure lower than the injection pressure thereby allowing the molten plastic composition (50) between the first and second solid skins (12, 14) of the respective portion (52) to expand by foaming to form an expanded cellular foam (10) as a result of the molten plastic composition (50) beneath the first solid skin (12) expanding outwardly away from the second solid skin (14) , wherein the opening step comprises removing the first mould part (32) so that the first solid skin (12) is no longer in contact with the first cavity-forming surface (36),
wherein the molten plastic composition (50) between the first and second solid skins (12, 14) of the respective portion (52) expands by foaming to form the expanded cellular foam (10) in a first foam forming phase and in a subsequent second foam forming phase,
wherein in the first foam forming phase the physical blowing agent comes out of solution in the polymer to form bubbles of the first gas (60) which form first and second layers (16, 18) of the expanded cellular foam (10), the first layer (16) being adjacent to the first solid skin (12) and the second layer (18) being adjacent to the second solid skin (14), thereby to increase a separation distance between the first and second solid skins (12, 14), and
in the subsequent second foam forming phase the physical blowing agent continues to form the first gas, and the chemical precursor of the chemical blowing agent decomposes to form the second gas, and the first gas, and the optional second gas, form further gas bubbles which form an intermediate layer (20) of the expanded cellular foam (10), the intermediate layer (20) being between, and adjacent to, the first and second layers (16, 18), thereby further to increase the separation distance between the first and second solid skins (12, 14), wherein the intermediate layer (20) comprises cells which have an average aspect ratio between a maximum cell dimension and a minimum cell dimension which is greater than 2:1 and less than 5:1 and the maximum cell dimension of the cells is oriented in a direction extending between the first and second solid skins (12, 14); and
(e) cooling the expanded cellular foam (10) to cause the molten plastic composition (50) between the first and second solid skins (12, 14) of the respective portion (52) to solidify and to form in the moulded polymer article (2) a monolithic wall part (4) comprising a core layer (8) of the expanded cellular foam (10) disposed between, and integral with, the first and second solid skins (12, 14), wherein the core layer (8) is multilaminar and comprises the first layer (16), the intermediate layer (20) and the second layer (18) of the expanded cellular foam (10), wherein the first and second layers (16, 18) comprise a first cellular microstructure (23) and the intermediate layer (20) comprises a second cellular microstructure (24), wherein the first cellular microstructure (23) comprises or consists of closed cells (22) having an average maximum cell dimension of from 200 to 500 µm, and wherein the second cellular microstructure (24) comprises or consists of open cells (26) interconnected by ruptured cellular walls (28) wherein in the second cellular microstructure (24) the open cells (26) have an average maximum cell dimension of from greater than 500 to up to 1500 µm.

2. The method of claim 1, wherein in the first cellular microstructure (23) the closed cells(22) have an average aspect ratio between a maximum cell dimension and a minimum cell dimension of from 1:1 to less than 2:1.

3. The method of claim 2, wherein in the first cellular microstructure (23) the closed cells (22) have an average aspect ratio between a maximum cell dimension and a minimum cell dimension which is greater than 1:1, and optionally less than 2:1, and the maximum cell dimension of the closed cells (22) is oriented in a direction extending between the first and second solid skins (12, 14), further optionally wherein in the first cellular microstructure (23) the maximum cell dimension of the closed cells (22) is oriented in a direction which is orthogonal to, or inclined at an acute angle to, the first and second solid skins (12, 14).

4. The method of any one of claims 1 to 3, wherein in the second cellular microstructure (24) the cells have an average aspect ratio between a maximum cell dimension and a minimum cell dimension which is greater than 3:1 and less than 5:1, optionally wherein in the second cellular microstructure (24) the maximum cell dimension of the cells is oriented in a direction extending between the first and second solid skins (12, 14), further optionally wherein in the second cellular microstructure (24) the maximum cell dimension of the cells is oriented in a direction which is orthogonal to, or inclined at an acute angle to, the first and second solid skins (12, 14).

5. The method of any one of claims 1 to 4, wherein prior to the opening step (d), the at least one portion (52) has a thickness of from 0.7 mm to up to 1 mm, and/or wherein after the cooling step (e), the at least one wall part (4) has a thickness of from 1 to 3 mm, optionally wherein after the cooling step (e), the at least one wall part (4) has a thickness of from 1 to 2 mm.

6. The method of any one of claims 1 to 5, wherein from the opening step (d) to the cooling step (e), the at least one first portion (52) has increased in thickness by from 1 to 2.5 mm to form the at least one wall part (4), optionally wherein from the opening step (d) to the cooling step (e), the at least one first portion (52) has increased in thickness by from 1 to 1.5 mm to form the at least one wall part (4).

7. The method of any one of claims 1 to 6, wherein from the opening step (d) to the cooling step (e), the at least one first portion (52) has increased in thickness by an expansion factor within the range of from 2 to 4 to form the at least one wall part (4).

8. The method of claim 7, wherein the expansion factor is within the range of from 2 to up to 3 and the blowing agent system consists of the physical blowing agent.

9. The method of claim 1, wherein the chemical precursor comprises a carbonate or bicarbonate salt and the second gas is carbon dioxide, and/or wherein the first gas is nitrogen and the second gas is carbon dioxide.

10. A moulded polymer article (2) comprising a monolithic wall part (4) composed of a polymer, the monolithic wall part (4) comprising a core layer (8) of expanded cellular foam (10), composed of the polymer, disposed between, and integral with, first and second solid skins (12, 14), composed of the polymer, wherein the core layer (8) is multilaminar and comprises a first layer (16) of the expanded cellular foam adjacent to the first solid skin (12), a second layer (18) of the expanded cellular foam (10) adjacent to the second solid skin (14), and an intermediate layer (20) of the expanded cellular foam (10) which is between, and adjacent to, the first and second layers (16, 18), wherein the first and second layers (16, 18) comprise a first cellular microstructure (23) comprising closed cells, **characterized in that** in the first cellular microstructure (23) the closed cells have an average maximum cell dimension of from 200 to 500 µm, and the intermediate layer (20) comprises a second cellular microstructure (24) comprising cells which have an average aspect ratio between a maximum cell dimension and a minimum cell dimension which is greater than 2:1 and less than 5:1 and wherein in the second cellular microstructure (24) the maximum cell dimension of the cells is oriented in a direction extending between the first and second solid skins (12, 14), wherein in the second cellular microstructure (24) the cells have an average maximum cell dimension of from greater than 500 to up to 1500 µm and in the second cellular microstructure (24) the cells comprise or consist of open cells (26) interconnected by ruptured cellular walls (28).

11. The moulded polymer article of claim 10, wherein in the first cellular microstructure (23) the closed cells (22) have an average aspect ratio between a maximum cell dimension and a minimum cell dimension of from 1:1 to less than 2:1.

12. The moulded polymer article of claim 10 or claim 11, wherein in the first cellular microstructure (23) the closed cells (22) have an average aspect ratio between a maximum cell dimension and a minimum cell dimension which is greater than 1:1, and optionally less than 2:1, and the maximum cell dimension of the closed cells is oriented in a direction extending between the first and second solid skins (12, 14).

13. The moulded polymer article of any one of claims 10 to 12, wherein in the second cellular microstructure (24) the cells have an average aspect ratio between a maximum cell dimension and a minimum cell dimension which is greater than 3:1 and less than 5:1.

14. The moulded polymer article of any one claims 10 to 13, wherein in the second cellular microstructure the maximum cell dimension of the cells is oriented in a direction which is orthogonal to, or inclined at an acute angle to, the first and second solid skins.

15. The moulded polymer article of any one of claims 10 to 14, wherein the wall part (4) has a thickness of from 1 to 3 mm, optionally wherein the wall part (4) has a thickness of from 1 to 2 mm.

## Patentansprüche

1. Verfahren zum Bilden eines geformten Polymerartikels (2), das Verfahren umfassend:
(a) Bereitstellen einer Form (30) mit einem ersten Formteil (32) und einem zweiten Formteil (34), wobei das erste und das zweite Formteil (32, 34) jeweils eine erste und eine zweite hohlraumbildende Oberfläche (36, 38) aufweisen;
(b) Schließen der Form (30), wodurch ein Hohlraum (42) zwischen der ersten und der zweiten hohlraumbildenden Oberfläche (36, 38) gebildet wird;
(c) Einspritzen einer geschmolzenen Kunststoffzusammensetzung (50) in den Hohlraum (42), umfassend ein Polymer und ein Treibmittelsystem, das in dem Polymer dispergiert ist, wobei die geschmolzene Kunststoffzusammensetzung (50) mit einem Einspritzdruck eingespritzt wird, wobei das Treibmittelsystem ein physikalisches Treibmittel umfasst, wobei das physikalische Treibmittel ein erstes Gas umfasst, das in dem Polymer gelöst ist, und, in Kombination mit dem physikalischen Treibmittel, ein chemisches Treibmittel, wobei das chemische Treibmittel einen chemischen Vorläufer umfasst, der sich zersetzen kann, um ein zweites Gas zu bilden, wobei das erste Gas ein anorganisches Gas ist, das in der geschmolzenen Kunststoffzusammensetzung (50) in einer Konzentration von 0,2 bis 1,5 Gew.-%, bezogen auf das Gesamtgewicht der geschmolzenen Kunststoffzusammensetzung (50), gelöst ist und wobei das zweite Gas ein anorganisches Gas ist, als das zweite und der chemische Vorläufer in der geschmolzenen Kunststoffzusammensetzung (50) in einer Konzentration von 0,5 bis 4,0 Gew.-%, bezogen auf das Gesamtgewicht der geschmolzenen Kunststoffzusammensetzung (50), dispergiert oder gelöst ist,
wobei während oder nach dem Schritt (c) des Einspritzens die eingespritzte Kunststoffzusammensetzung (50) in Kontakt mit der ersten und zweiten hohlraumbildenden Oberfläche (36, 38) abgekühlt wird, um eine erste und zweite feste Haut (12, 14) zu bilden, die an die erste und zweite hohlraumbildende Oberfläche (36, 38) angrenzt und mit diesen in Kontakt steht, wobei in mindestens einer Region des Hohlraums (42) jeweils mindestens ein Abschnitt (52) der Kunststoffzusammensetzung (50) angeordnet ist, wobei in diesem Abschnitt (52) mindestens ein Teil der Kunststoffzusammensetzung (50) zwischen den ersten und zweiten festen Häuten (12, 14) geschmolzen bleibt, wobei der mindestens eine Abschnitt (52) eine Dicke von mehr als 0,45 mm bis zu 1 mm aufweist;
(d) Öffnen der Form (30), bevor die geschmolzene Kunststoffzusammensetzung (50) zwischen der ersten und der zweiten festen Haut (12, 14) in dem mindestens einen Abschnitt (52) erstarrt ist, um die geschmolzene Kunststoffzusammensetzung (50) des jeweiligen Abschnitts (52) einem äußeren Druck auszusetzen, der niedriger ist als der Einspritzdruck, wodurch die geschmolzene Kunststoffzusammensetzung (50) zwischen der ersten und der zweiten festen Haut (12, 14) des jeweiligen Abschnitts (52) durch Aufschäumen zu expandieren, um einen expandierten zellularen Schaum (10) als Ergebnis der geschmolzenen Kunststoffzusammensetzung (50) unter der ersten festen Haut (12) zu bilden, die sich nach außen weg von der zweiten festen Haut (14) ausdehnt, wobei der Schritt des Öffnens das Entfernen des ersten Formteils (32) umfasst, sodass die erste feste Haut (12) nicht mehr in Kontakt mit der ersten hohlraumbildenden Oberfläche (36) ist,
wobei die geschmolzene Kunststoffzusammensetzung (50) zwischen der ersten und zweiten festen Haut (12, 14) des jeweiligen Abschnitts (52) durch Aufschäumen expandiert, um den expandierten zellularen Schaum (10) in einer ersten Phase der Schaumbildung und in einer anschließenden zweiten Phase der Schaumbildung zu bilden, wobei in der ersten Phase der Bildung des Schaums das physikalische Treibmittel aus der Lösung in dem Polymer austritt, um Blasen des ersten Gases (60) zu bilden, die eine erste und eine zweite Schicht (16, 18) des expandierten zellulären Schaums (10) bilden, wobei die erste Schicht (16) an die erste feste Haut (12) und die zweite Schicht (18) an die zweite feste Haut (14) angrenzt, um dadurch einen Trennungsabstand zwischen der ersten und der zweiten festen Haut (12, 14) zu vergrößern, und
in der anschließenden zweiten Phase der Schaumbildung das physikalische Treibmittel weiterhin das erste Gas bildet und der chemische Vorläufer des chemischen Treibmittels sich zersetzt, um das zweite Gas zu bilden, und das erste Gas und das optionale zweite Gas weitere Gasblasen bilden, die eine Zwischenschicht (20) des expandierten zellulären Schaums (10) bilden, wobei die Zwischenschicht (20) zwischen der ersten und der zweiten Schichten (16, 18) liegt und an diese angrenzt, wodurch der Trennungsabstand zwischen der ersten und der zweiten festen Haut (12, 14) weiter vergrößert wird, wobei die Zwischenschicht (20) Zellen umfasst, die ein durchschnittliches Seitenverhältnis zwischen einer maximalen Zellabmessung und einer minimalen Zellabmessung aufweisen, das mehr als 2:1 und weniger als 5:1 beträgt und die maximale Zellabmessung der Zellen in einer Richtung orientiert ist, die sich zwischen den ersten und zweiten festen Häuten (12, 14) erstreckt; und
(e) Abkühlen des expandierten zellularen Schaums (10), um die geschmolzene Kunststoffzusammensetzung (50) zwischen der ersten und der zweiten festen Haut (12, 14) des jeweiligen Abschnitts (52) zu verfestigen und in dem geformten Polymerartikel (2) einen monolithischen Wandteil (4) zu bilden, der eine Kernschicht (8) aus dem expandierten zellularen Schaum (10) umfasst, die zwischen und integral mit der ersten und zweiten festen Haut (12, 14) angeordnet ist, wobei die Kernschicht (8) multilaminar ist und die erste Schicht (16), die Zwischenschicht (20) und die zweite Schicht (18) des expandierten zellulären Schaums (10) umfasst, wobei die ersten und zweiten Schichten (16, 18) eine erste zelluläre Mikrostruktur (23) umfassen und die Zwischenschicht (20) eine zweite zelluläre Mikrostruktur (24) umfasst, wobei die erste zelluläre Mikrostruktur (23) geschlossene Zellen (22) umfasst oder daraus besteht, die eine durchschnittliche maximale Zellabmessung von 200 bis 500 µm aufweisen, und wobei die zweite zelluläre Mikrostruktur (24) offene Zellen (26) umfasst oder daraus besteht, die durch zerbrochene Zellwände (28) miteinander verbunden sind, wobei in der zweiten zellulären Mikrostruktur (24) die offenen Zellen (26) eine durchschnittliche maximale Zellabmessung von mehr als 500 bis zu 1500 µm aufweisen.

2. Verfahren nach Anspruch 1, wobei in der ersten zellulären Mikrostruktur (23) die geschlossenen Zellen (22) ein durchschnittliches Seitenverhältnis zwischen einer maximalen Zellabmessung und einer minimalen Zellabmessung von 1:1 bis weniger als 2:1 aufweisen.

3. Verfahren nach Anspruch 2, wobei in der ersten zellulären Mikrostruktur (23) die geschlossenen Zellen (22) ein durchschnittliches Seitenverhältnis zwischen einer maximalen Zelldimension und einer minimalen Zelldimension aufweisen, das größer als 1:1 und optional kleiner als 2:1 ist, und die maximale Zellabmessung der geschlossenen Zellen (22) in einer Richtung orientiert ist, die sich zwischen der ersten und der zweiten festen Haut (12, 14) erstreckt, wobei ferner optional in der ersten zellulären Mikrostruktur (23) die maximale Zellabmessung der geschlossenen Zellen (22) in einer Richtung orientiert ist, die orthogonal zu oder in einem spitzen Winkel zu der ersten und der zweiten festen Haut (12, 14) geneigt ist.

4. Verfahren nach einem der Ansprüche 1 bis 3, wobei die Zellen in der zweiten zellulären Mikrostruktur (24) ein durchschnittliches Seitenverhältnis zwischen einer maximalen Zellabmessung und einer minimalen Zellabmessung aufweisen, das größer als 3:1 und kleiner als 5:1 ist, wobei optional in der zweiten zellulären Mikrostruktur (24) die maximale Zellabmessung der Zellen in einer Richtung orientiert ist, die sich zwischen der ersten und der zweiten festen Haut (12, 14) erstreckt, wobei ferner optional in der zweiten zellulären Mikrostruktur (24) die maximale Zellabmessung der Zellen in einer Richtung orientiert ist, die orthogonal zu oder in einem spitzen Winkel zu der ersten und der zweiten festen Haut (12, 14) geneigt ist.

5. Verfahren nach einem der Ansprüche 1 bis 4, wobei vor dem Öffnungsschritt (d) der mindestens eine Abschnitt (52) eine Dicke von 0,7 mm bis zu 1 mm aufweist, und/oder wobei nach dem Kühlschritt (e) der mindestens eine Wandteil (4) eine Dicke von 1 bis 3 mm aufweist, wobei optional nach dem Kühlschritt (e) der mindestens eine Wandteil (4) eine Dicke von 1 bis 2 mm aufweist.

6. Verfahren nach einem der Ansprüche 1 bis 5, wobei der mindestens eine erste Abschnitt (52) vom Öffnungsschritt (d) bis zum Abkühlungsschritt (e) eine um 1 bis 2,5 mm erhöhte Dicke aufweist, um den mindestens einen Wandteil (4) zu bilden, optional wobei der mindestens eine erste Abschnitt (52) vom Öffnungsschritt (d) bis zum Abkühlungsschritt (e) eine um 1 bis 1,5 mm erhöhte Dicke aufweist, um den mindestens einen Wandteil (4) zu bilden.

7. Verfahren nach einem der Ansprüche 1 bis 6, wobei der mindestens eine erste Abschnitt (52) vom Öffnungsschritt (d) bis zum Abkühlungsschritt (e) um einen Expansionsfaktor im Bereich von 2 bis 4 an Dicke zugenommen hat, um den mindestens einen Wandteil (4) zu bilden.

8. Verfahren nach Anspruch 7, wobei der Expansionsfaktor im Bereich von 2 bis maximal 3 liegt und das System aus dem physikalischen Treibmittel besteht.

9. Verfahren nach Anspruch 1, wobei der chemische Vorläufer ein Carbonat- oder Bicarbonatsalz umfasst und das zweite Gas Kohlendioxid ist, und/oder wobei das erste Gas Stickstoff und das zweite Gas Kohlendioxid ist.

10. Geformter Polymerartikel (2), umfassend ein monolithisches Wandteil (4), das aus einem Polymer besteht, wobei das monolithische Wandteil (4) eine Kernschicht (8) aus expandiertem zellulärem Schaum (10) umfasst, die aus dem Polymer besteht und zwischen und einstückig mit einer ersten und einer zweiten festen Haut (12, 14) angeordnet ist, die aus dem Polymer bestehen, wobei die Kernschicht (8) multilaminar ist und eine erste Schicht (16) des expandierten zellularen Schaums angrenzend an die erste feste Haut (12), eine zweite Schicht (18) des expandierten zellularen Schaums (10) angrenzend an die zweite feste Haut (14) und eine Zwischenschicht (20) des expandierten zellularen Schaums (10) umfasst, die zwischen und angrenzend an die erste und zweite Schicht (16, 18) liegt, wobei die erste und die zweite Schicht (16, 18) eine erste zelluläre Mikrostruktur (23) umfassen, die geschlossene Zellen aufweist, **dadurch gekennzeichnet, dass** in der ersten zellulären Mikrostruktur (23) die geschlossenen Zellen eine durchschnittliche maximale Zellabmessung von 200 bis 500 µm aufweisen, und die Zwischenschicht (20) eine zweite zelluläre Mikrostruktur (24) umfasst, die Zellen aufweist, die ein durchschnittliches Seitenverhältnis zwischen einer maximalen Zellabmessung und einer minimalen Zellabmessung aufweisen, das größer als 2:1 und kleiner als 5:1 ist und wobei in der zweiten zellulären Mikrostruktur (24) die maximale Zellabmessung der Zellen in einer Richtung orientiert ist, die sich zwischen der ersten und der zweiten festen Haut (12, 14) erstreckt, wobei in der zweiten zellulären Mikrostruktur (24) die Zellen eine durchschnittliche maximale Zellabmessung von mehr als 500 bis zu 1500 µm aufweisen und in der zweiten zellulären Mikrostruktur (24) die Zellen offene Zellen (26) umfassen oder daraus bestehen, die durch zerbrochene Zellwände (28) miteinander verbunden sind.

11. Geformter Polymerartikel nach Anspruch 10, wobei in der ersten zellulären Mikrostruktur (23) die geschlossenen Zellen (22) ein durchschnittliches Seitenverhältnis zwischen einer maximalen Zellabmessung und einer minimalen Zellabmessung von 1:1 bis weniger als 2:1 aufweisen.

12. Geformter Polymerartikel nach Anspruch 10 oder 11, wobei in der ersten zellulären Mikrostruktur (23) die geschlossenen Zellen (22) ein durchschnittliches Seitenverhältnis zwischen einer maximalen Zellabmessung und einer minimalen Zellabmessung aufweisen, das größer als 1:1 und optional kleiner als 2:1 ist, und die maximale Zellabmessung der geschlossenen Zellen in einer Richtung orientiert ist, die sich zwischen der ersten und zweiten festen Haut (12, 14) erstreckt.

13. Geformter Polymerartikel nach einem der Ansprüche 10 bis 12, wobei die Zellen in der zweiten zellulären Mikrostruktur (24) ein durchschnittliches Seitenverhältnis zwischen einer maximalen Zellabmessung und einer minimalen Zellabmessung aufweisen, das größer als 3:1 und kleiner als 5:1 ist.

14. Geformter Polymerartikel nach einem der Ansprüche 10 bis 13, wobei in der zweiten zellulären Mikrostruktur die maximale Zellabmessung der Zellen in einer Richtung ausgerichtet ist, die orthogonal oder in einem spitzen Winkel zu den ersten und zweiten festen Häuten geneigt ist.

15. Geformter Polymerartikel nach einem der Ansprüche 10 bis 14, wobei der Wandteil (4) eine Dicke von 1 bis 3 mm aufweist, optional wobei der Wandteil (4) eine Dicke von 1 bis 2 mm aufweist.

## Revendications

1. Procédé de formation d'un article polymère moulé (2), le procédé comprenant :
(a) la fourniture d'un moule (30) présentant une première partie de moule (32) et une seconde partie de moule (34), les première et seconde parties de moule (32, 34) ayant des première et seconde surfaces de formation de cavité respectives (36, 38) ;
(b) la fermeture du moule (30) définissant ainsi une cavité (42) entre les première et seconde surfaces de formation de cavité (36, 38) ;
(c) l'injection dans la cavité (42) d'une composition plastique fondue (50) comprenant un polymère et un système d'agent gonflant dispersé dans le polymère, la composition plastique fondue (50) étant injectée à une pression d'injection, dans lequel le système d'agent gonflant comprend un agent gonflant physique, dans lequel l'agent gonflant physique comprend un premier gaz dissous dans le polymère, et, en combinaison avec l'agent gonflant physique, un agent gonflant chimique, l'agent gonflant chimique comprenant un précurseur chimique capable de se décomposer pour former un second gaz, dans lequel le premier gaz est un gaz inorganique dissous dans la composition plastique fondue (50) à une concentration de 0,2 à 1,5 % en poids, par rapport au poids total de la composition plastique fondue (50) et dans lequel le second gaz est un gaz inorganique, et le précurseur chimique est dispersé ou dissous dans la composition plastique fondue (50) à une concentration de 0,5 à 4 % en poids, par rapport au poids total de la composition plastique fondue (50),
dans lequel, pendant ou après l'étape d'injection (c), la composition plastique injectée (50) en contact avec les première et seconde surfaces de formation de cavité (36, 38) est refroidie pour former des première et seconde peaux solides (12, 14) respectivement adjacentes et en contact avec les première et seconde surfaces de formation de cavité (36, 38), de sorte que dans au moins une région de la cavité (42) est respectivement située au moins une partie (52) de la composition plastique (50) dans laquelle partie (52) au moins une partie de la composition plastique (50) entre les première et seconde peaux solides (12, 14) reste fondue, dans lequel l'au moins une partie (52) présente une épaisseur de plus de 0,45 mm à jusqu'à 1 mm ;
(d) l'ouverture du moule (30) avant que la composition plastique fondue (50) entre les première et seconde peaux solides (12, 14) ne soit solidifiée dans l'au moins une partie (52), de manière à exposer la composition plastique fondue (50) de la partie concernée (52) à une pression externe inférieure à la pression d'injection permettant ainsi à la composition plastique fondue (50) entre les première et seconde peaux solides (12, 14) de la partie concernée (52) de s'expanser par moussage pour former une mousse cellulaire expansée (10) sous la première peau solide (12) et s'éloigner de la seconde peau solide (14), dans lequel l'étape d'ouverture comprend le retrait de la première partie du moule (32) de sorte que la première peau solide (12) ne soit plus en contact avec la première surface de formation de cavité (36),
dans lequel la composition plastique fondue (50) entre les première et seconde peaux solides (12, 14) de la partie respective (52) se déploie en moussant pour former la mousse cellulaire expansée (10) dans une première phase de formation de mousse et dans une seconde phase ultérieure de formation de mousse,
dans lequel, dans la première phase de formation de mousse, l'agent gonflant physique sort de la solution dans le polymère pour former des bulles du premier gaz (60) qui forment les première et seconde couches (16, 18) de la mousse cellulaire expansée (10), la première couche (16) étant adjacente à la première peau solide (12) et la seconde couche (18) étant adjacente à la seconde peau solide (14), augmentant ainsi la distance de séparation entre les première et seconde peaux solides (12, 14), et lors de la seconde phase de formation de mousse, l'agent gonflant physique continue de former le premier gaz, et le précurseur chimique de l'agent gonflant chimique se décompose pour former le second gaz, et le premier gaz, et éventuellement le second gaz, forment d'autres bulles de gaz qui forment une couche intermédiaire (20) de la mousse cellulaire expansée (10), la couche intermédiaire (20) est située entre et adjacente aux première et seconde couches (16, 18), augmentant ainsi la distance de séparation entre les première et seconde couches solides (12, 14), dans lequel la couche intermédiaire (20) comprend des cellules dont le rapport d'aspect moyen entre une dimension maximale et une dimension minimale est supérieur à 2:1 et inférieur à 5:1, et la dimension maximale des cellules est orientée dans une direction se prolongeant entre les première et seconde couches solides (12, 14) ; et
(e) le refroidissement de la mousse cellulaire expansée (10) pour solidifier la composition plastique fondue (50) entre les première et seconde peaux solides (12, 14) de la partie respective (52) et former, dans l'article polymère moulé (2), une paroi monolithique (4) comprenant une couche centrale (8) de la mousse cellulaire expansée (10) disposée entre les première et seconde peaux solides (12, 14) et faisant partie intégrante avec, les première et les seconde peaux solides (12, 14), dans lequel la couche centrale (8) est multilaminaire et comprend la première couche (16), la couche intermédiaire (20) et la seconde couche (18) de mousse cellulaire expansée (10), dans lequel les première et seconde couches (16, 18) comprennent une première microstructure cellulaire (23) et la couche intermédiaire (20) comprend une seconde microstructure cellulaire (24), dans lequel la première microstructure cellulaire (23) comprend ou est constituée de cellules fermées (22) dont la dimension cellulaire maximale moyenne est comprise entre 200 et 500 µm et dans lequel la seconde microstructure cellulaire (24) comprend ou est constituée de cellules ouvertes (26) interconnectées par des parois cellulaires rompues (28), dans lequel, dans la seconde microstructure cellulaire (24), les cellules ouvertes (26) ont une dimension cellulaire maximale moyenne de plus de 500 jusqu'à 1500 µm.

2. Procédé selon la revendication 1, dans lequel dans la première microstructure cellulaire (23), les cellules fermées (22) présentent un rapport d'aspect moyen entre une dimension de cellule maximale et une dimension de cellule minimale de 1:1 à moins de 2:1.

3. Procédé selon la revendication 2, dans lequel, dans la première microstructure cellulaire (23), les cellules fermées (22) présentent un rapport d'aspect moyen entre une dimension de cellule maximale et une dimension de cellule minimale qui est supérieur à 1:1, et éventuellement inférieur à 2:1, et la dimension de cellule maximale des cellules fermées (22) est orientée dans une direction se prolongeant entre les première et seconde peaux solides (12, 14), également éventuellement dans lequel, dans la première microstructure cellulaire (23), la dimension de cellule maximale des cellules fermées (22) est orientée dans une direction qui est orthogonale à, ou inclinée à un angle aigu par rapport à, les première et seconde peaux solides (12, 14).

4. Procédé selon l'une quelconque des revendications 1 à 3, dans lequel, dans la seconde microstructure cellulaire (24), les cellules présentent un rapport d'aspect moyen entre une dimension de cellule maximale et une dimension de cellule minimale qui est supérieur à 3:1 et inférieur à 5:1, éventuellement dans lequel, dans la seconde microstructure cellulaire (24), la dimension de cellule maximale des cellules est orientée dans une direction se prolongeant entre les première et seconde peaux solides (12, 14), également éventuellement dans lequel, dans la seconde microstructure cellulaire (24), la dimension de cellule maximale des cellules est orientée dans une direction qui est orthogonale à, ou inclinée à un angle aigu par rapport à, la première et la seconde peaux solides (12, 14).

5. Procédé selon l'une quelconque des revendications 1 à 4, dans lequel avant l'étape d'ouverture (d), l'au moins une partie (52) présente une épaisseur de 0,7 mm à 1 mm, et/ou dans lequel après l'étape de refroidissement (e), l'au moins une partie de paroi (4) présente une épaisseur de 1 à 3 mm, éventuellement dans lequel après l'étape de refroidissement (e), l'au moins une partie de paroi (4) présente une épaisseur de 1 à 2 mm.

6. Procédé selon l'une quelconque des revendications 1 à 5, dans lequel, de l'étape d'ouverture (d) à l'étape de refroidissement (e), l'au moins une première partie (52) a augmenté d'épaisseur de 1 à 2,5 mm pour former l'au moins une partie de paroi (4), éventuellement dans lequel, de l'étape d'ouverture (d) à l'étape de refroidissement (e), l'au moins une première partie (52) a augmenté d'épaisseur de 1 à 1,5 mm pour former l'au moins une partie de paroi (4).

7. Procédé selon l'une quelconque des revendications 1 à 6, dans lequel, de l'étape d'ouverture (d) à l'étape de refroidissement (e), l'au moins une première partie (52) a augmenté d'épaisseur selon un facteur de dilatation compris dans la plage de 2 à 4 pour former l'au moins une partie de paroi (4).

8. Procédé selon la revendication 7, dans lequel le facteur d'expansion est compris entre 2 et 3 et le système d'agent gonflant est constitué de l'agent gonflant physique.

9. Procédé selon la revendication 1, dans lequel le précurseur chimique comprend un sel de carbonate ou de bicarbonate et le second gaz est du dioxyde de carbone, et/ou dans lequel le premier gaz est de l'azote et le second gaz est du dioxyde de carbone.

10. Article polymère moulé (2) comprenant une paroi monolithique (4) en polymère, la paroi monolithique (4) comprenant une couche centrale (8) en mousse cellulaire expansée (10) en polymère, disposée entre, et faisant partie intégrante avec des première et seconde peaux solides (12, 14), en polymère, dans lequel la couche centrale (8) est multilaminaire et comprend une première couche (16) en mousse cellulaire expansée adjacente à la première peau solide (12), une seconde couche (18) en mousse cellulaire expansée (10) adjacente à la seconde peau solide (14), et une couche intermédiaire (20) en mousse cellulaire expansée (10) située entre, et adjacente aux première et seconde couches (16, 18), dans lequel les première et seconde couches (16, 18) comprennent une première microstructure cellulaire (23) comprenant des cellules fermées, **caractérisé en ce que** dans la première microstructure cellulaire (23), les cellules fermées présentent une dimension cellulaire maximale moyenne comprise entre 200 et 500 µm, et la couche intermédiaire (20) comprend une seconde microstructure cellulaire (24) comprenant des cellules qui présentent un rapport d'aspect moyen entre une dimension de cellule maximale et une dimension de cellule minimale qui est supérieur à 2:1 et inférieur à 5:1 et dans lequel, dans la seconde microstructure cellulaire (24), la dimension de cellule maximale des cellules est orientée dans une direction se prolongeant entre les première et seconde peaux solides (12, 14), dans lequel, dans la seconde microstructure cellulaire (24), les cellules présentent une dimension de cellule maximale moyenne de plus de 500 à jusqu'à 1500 µm et dans la seconde microstructure cellulaire (24), les cellules comprennent ou sont constituées de cellules ouvertes (26) interconnectées par des parois cellulaires rompues (28).

11. Article polymère moulé selon la revendication 10, dans lequel dans la première microstructure cellulaire (23), les cellules fermées (22) présentent un rapport d'aspect moyen entre une dimension de cellule maximale et une dimension de cellule minimale de 1:1 à moins de 2:1.

12. Article polymère moulé selon la revendication 10 ou la revendication 11, dans lequel, dans la première microstructure cellulaire (23), les cellules fermées (22) présentent un rapport d'aspect moyen entre une dimension de cellule maximale et une dimension de cellule minimale qui est supérieur à 1:1, et éventuellement inférieur à 2:1, et la dimension de cellule maximale des cellules fermées est orientée dans une direction se prolongeant entre les première et seconde peaux solides (12, 14).

13. Article polymère moulé selon l'une quelconque des revendications 10 à 12, dans lequel dans la seconde microstructure cellulaire (24), les cellules présentent un rapport d'aspect moyen entre une dimension de cellule maximale et une dimension de cellule minimale qui est supérieur à 3:1 et inférieur à 5:1.

14. Article polymère moulé selon l'une quelconque des revendications 10 à 13, dans lequel, dans la seconde microstructure cellulaire, la dimension cellulaire maximale des cellules est orientée dans une direction qui est orthogonale à, ou inclinée à un angle aigu par rapport aux première et seconde peaux solides.

15. Article polymère moulé selon l'une quelconque des revendications 10 à 14, dans lequel la partie de paroi (4) a une épaisseur de 1 à 3 mm, éventuellement dans lequel la partie de paroi (4) a une épaisseur de 1 à 2 mm.
